# EUROPÄISCHE PATENTSCHRIFT

(11) **EP 2 227 347 B1**
(45) Veröffentlichungstag und Bekanntmachung des Hinweises auf die Patenterteilung: **04.05.2011**
(21) Anmeldenummer: 09748121.2
(22) Anmeldetag: 09.11.2009
(51) Int. Cl.: B23K 20/10

(54) **VERBINDUNG UND VERFAHREN ZUM VERBINDEN EINES ALUMINIUMLITZENLEITERS MITTELS TORSIONALEM ULTRASCHALLSCHWEISSEN**
CONNECTION AND METHOD TO CONNECT STRANDED ALUMINIUM CONDUCTORS BY TORSIONAL ULTRASONIC WELDING
CONNECTEUR METHOD POUR CONNECTER CONDUCTEUR TORSADE D'ALUMINIUM& xA;PAR SOUDAGE PAR ULTRASONS EN TORSION

(30) Priorität: 28.11.2008 DE 102008059481
(43) Veröffentlichungstag der Anmeldung: 15.09.2010
(73) Patentinhaber: Auto-Kabel Managementgesellschaft mbH, 79688 Hausen i.W. (DE); Lietz, Franz-Josef, 46049 Oberhausen-Lirich (DE)
(72) Erfinder: SCHLOMS, Martin, 52076 Aachen (DE); MARTENS, Sebastian, 50127 Bergheim (DE); LIETZ, Franz-Josef, 46049 Oberhausen-Lirich (DE)
(74) Vertreter: Cohausz & Florack
(86) Internationale Anmeldenummer: PCT/EP2009/064823
(87) Internationale Veröffentlichungsnummer: WO 2010/060780

(56) Entgegenhaltungen:
- EP-A2- 1 032 077
- DE-A1- 10 249 569
- DE-U1-202007 009 701
- GB-A- 1 125 567

## Beschreibung

Der Gegenstand betrifft eine Verbindung eines Aluminiumlitzenleiters mit einem Anschlussteil mit einem abisolierten Ende des Aluminiumlitzenleiters, und einem mit dem abisolierten Ende des Aluminiumlitzenleiters stoffschlüssig verbundenem metallischen Anschlussteil. Darüber hinaus betrifft der Gegenstand ein Verfahren zur Herstellung einer solchen Verbindung als auch eine Verwendung einer solchen Verbindung.

Die Verbindung von Aluminiumlitzenleitern mit Anschlussteilen, beispielsweise Kabelschuhen aus Kupfer oder anderen Nichteisenmetallen ist beispielsweise aus der EP 1 032 077 A2 bekannt. Bei diesem Verfahren wird durch eine Hülse eine stoffschlüssige Schweißverbindung zwischen Kontaktteil und Leitung erzeugt, welche im Wesentlichen ohne Lufteinschlüsse zwischen den Einzellitzen des Aluminiumlitzenleiters im Schweißknoten ist. Die Aluminiumlitzen und die Aluminiumhülse bilden im Schweißbereich einen homogenen, dichten Schweißknoten, bei dem im Wesentlichen kein Elektrolyt in die Schweißverbindung gelangen kann und somit eine Kontaktkorrosion vermieden wird.

Nachteilig aus dem aus der EP 1 032 077 A2 bekannten Verfahren ist, dass die Fügepartner rotationssymmetrisch sein müssen. Dies schränkt den Anwendungsbereich des aus dem Stand der Technik bekannten Verfahrens erheblich ein, da die Fügepartner für die Anwendung eines Rotationsreibschweißverfahrens gegeneinander koaxial rotiert werden müssen, was bedingt, dass die Fügepartner selbst im Wesentlichen rotationssymmetrisch sind oder zumindest drehbar in ein Rotationsreibschweißwerkzeug eingespannt werden können. Aufgrund der hohen Rotationsgeschwindigkeiten beim Rotationsreibschweißen führen Unsymmetrien in der Rotationsebene der Fügepartner zu Unwuchten, welche den Schweißprozess negativ beeinträchtigen können. Darüber hinaus ist es beim Rotationsreibschweißen nicht möglich, den axialen Winkel zwischen den Fügepartnern einzustellen. Die Endposition der Rotationsreibschweißwerkzeuge zueinander lässt sich nicht exakt bestimmen, so dass sich eine axiale Verschiebung der Fügepartner zueinander ergeben kann. Dies kann prozesstechnisch unerwünscht sein. Darüber hinaus ist der Einsatz eines Reibschweißverfahrens auf Querschnitte von über 35mm² begrenzt.

Aus diesem Grunde lag dem Gegenstand die Aufgabe zugrunde, ein Schweißverfahren zur Verfügung zu stellen, mit welchem Aluminiumlitzenleiter mit Anschlussteilen in axial definierten Positionen sicher miteinander verbunden werden können.

Diese Aufgabe wird gegenständlich durch eine Verbindung eines Aluminiumlitzenleiters mit einem Anschlussteil mit einem abisolierten Endes des Aluminiumlitzenleiters und einem mit dem abisolierten Ende des Aluminiumlitzenleiters stoffschlüssig verbundenem metallischen Anschlussteil gelöst, bei dem eine Stirnseite des abisolierten Endes des Aluminiumlitzenleiters mit dem Anschlussteil mittels torsionalem Ultraschallschweißen verschweißt ist. Es ist erkannt worden, dass sich mittels torsionalem Ultraschallschweißen eine massive Schweißverbindung unter Vermeidung von Lufteinschlüssen zwischen den Aluminiumlitzen herstellen lässt. Die Fügepartner, nämlich der Aluminiumlitzenleiter und das Anschlussteil werden beim torsionalen Ultraschallschweißen mittels axialer Relativbewegungen zueinander bewegt. Die torsionale Bewegung der Fügepartner zueinander findet im Ultraschallbereich statt, beispielsweise mit einer Frequenz von 20kHz oder mehr. Die Fügepartner werden dabei in minimalen Amplituden, beispielsweise 10-100µm bevorzugt 20-40µm bzw. zwischen 0,1° und 5° zueinander verdreht. Da die Schweißenergie durch torsionales Schwingen der Fügepartner eingebracht wird, müssen die Schweißfl̋ächen nicht mehr rotationssymmetrisch sein. Vielmehr können nun die verschiedensten Geometrien von Kontaktteilen, wie Rechtecke, Ovale oder Ellipsen, miteinander verschweißt werden. Es ist lediglich notwendig, dass das Anschlussteil die Aluminiumlitzen des Aluminiumlitzenleiters vollständig stirnseitig überdeckt. Dadurch, dass beim torsionalen Ultraschallschweißen die Kontaktteile auch Blechbiegeteile sein können, ist es möglich, die Kontaktteile, die herkömmlich beim Rotationsreibschweißen eingesetzt werden, wie beispielsweise teure Schmiedekabelschuhe, durch günstige Blechbiegeteile zu ersetzen.

Auch ist es möglich, dass Anschlussteil im Schweißbereich mit einer Reliefstruktur derart zu versehen, dass der Aluminiumleiter an das Kontaktteil so verschweißt wird, dass die Schweißwulst in den Bereich des Reliefs um die Schweißnaht herum liegt. Beispielsweise kann mittels Tiefziehen oder anderer Prozesse eine Topfstruktur vorgesehen sein, wobei der Durchmesser dieses Topfes etwas größer ist, als der Durchmesser des Aluminiumlitzenleiters, so dass die Schweißwulst im Bereich des Topfes erstarrt insbesondere im Ringraum zwischen dem Aluminiumlitzenleiter und dem Innendurchmesser des Topfes.

Gemäß einem vorteilhaften Ausführungsbeispiel wird vorgeschlagen, dass ein das abisolierte Ende des Aluminiumlitzenleiters umschließendes Verpressteil die Aluminiumlitzen zu einem Bündel verpresst. Das Verpressen kann derart sein, dass das Bündel frei von Lufteinschlüssen ist. Nach dem Abisolieren können die Aluminiumlitzen durch das Verpressteil kompaktiert werden. Hierbei werden mittels eines mechanischen Verpressens die Litzen derart aneinander gepresst, dass Hohlräume reduziert bzw. entfernt werden.

Anschließend kann das verpresste Ende des Aluminiumlitzenleiters mittels spannhebender Verfahren bearbeitet werden, um Aluminiumoxide auf der Stirnseite zu entfernen. Beispielsweise kann die Stirnseite überfräst werden, so dass sich eine ebene Stirnfläche bildet. Auch kann die Stirnfläche geschleift werden.

Dadurch, dass Hohlräume zwischen den Aluminiumlitzen vermieden werden, wird verhindert, dass im Bereich der Schweißnaht Korrosionen auftreten. Im Bereich der Schweißnaht kann der Aluminiumlitzenleiter ähnlich einem Vollmaterial verarbeitet werden, da Hohlräume vermieden sind.

Das Verpressteil kann gemäß einem vorteilhaften Ausführungsbeispiel als Hülse oder Splicecrimp gebildet sein. Die Hülse kann, bevor der Aluminiumlitzenleiter mit dem Anschlussteil verschweißt wird, auf das abisolierte Ende des Aluminiumlitzenleiters aufgeschoben und verpresst werden. Ein Splicecrimp kann beispielsweise derart geformt werden, dass ein Stück Endlosband, beispielsweise aus Aluminium oder Legierungen davon, beispielsweise mit einer Bleckstärke von 1 bis 1,5mm, abgelängt und an das stirnseitige abisolierte Ende des Aluminiumlitzenleiters angebracht wird. Hierbei wird das Flachbandmaterial um die Litzen gelegt und verpresst, so dass an der Stirnfläche des Aluminiumlitzenleiters ein massiver, kompaktierter Bereich entsteht, der sich zum stirnseitigen Verschweißen mit einem Kontaktteil eignet. Hierdurch ist es möglich, preiswert, schnell und unkompliziert flexible Verbindungen zu erstellen. Die Kosten für eine Aluminiumhülse, als auch die aufwendige Verarbeitung, insbesondere das Fügen der einzelnen Hülsen auf die Leitungen und das Positionieren der Leitungen mit der Hülse im Verpresswerkzeug, können eingespart werden. Das Flachbandmaterial kann beispielsweise aus einem Endlosbandmaterial zugeführt werden.

Stauchkräfte entstehen sowohl beim Ultraschallschweißen als auch beim Rotationsreibschweißen. Da beim Ultraschallschweißen, insbesondere beim torsionalen Ultraschallschweißen, die Stauchkräfte erheblich geringer sind als beim Rotationsreibschweißen, können die Hülse oder der Splicecrimp mit geringeren Wandstärken dimensioniert werden. Hierbei ist es beispielsweise möglich, dass die Wandstärken der Hülse bzw. des Splicecrimps zwischen 0,5 und 2mm sind. Auch ist es möglich, dass die axiale Länge des Splicecrimps oder der Hülse geringer sein kann als beim Rotationsreibschweißen. Beispielsweise ist es möglich, dass die Hülse kürzer als 5cm, bevorzugt kürzer als 3cm, insbesondere bevorzugt kürzer als 1cm ist. Eine solche axiale Länge reicht aus, um die auftretenden Stauchkräfte aufzunehmen.

Beim weiteren Verschweißen kann die Aluminiumlitzenleitung in eine geeignete Aufnahme eines Schweißwerkzeugs eingespannt werden, welche die beim Schweißen auftretenden axialen Kräfte aufnimmt. Hierbei ist es beispielsweise möglich, dass das Anschlussteil im Schweißbereich auf die Stirnfläche der verpressten Aluminiumlitzenleitung aufgesetzt wird und mit der Sonotrode axial in Richtung des Aluminiumlitzenleiters belastet wird. Hierbei ist es beispielsweise möglich, dass die Koppelfläche von Sonotrode zu Anschlussteil mit einem hohen Anpressdruck bzw. einer aggressiven Verzahnung verbunden ist. Dadurch wird die Schweißbewegung der Sonotrode auf das Anschlussteil übertragen, wohingegen die verpresste Aluminiumlitzenleitung in der Aufnahme fest eingespannt sein kann. Durch die Relativbewegung der Schweißpartner zueinander wird Energie in Form von Reibung in die Schweißebene eingebracht, so dass es unter Druckbeaufschlagung zu einer Verschweißung von Anschlussteil und Aluminiumlitzenleitung kommt.

Gemäß einem vorteilhaften Ausführungsbeispiel wird vorgeschlagen, dass das Verpressteil die Aufnahme ist. Die Aufnahme des Werkzeuges kann beispielsweise derart geformt sein, dass diese die Aluminiumlitzen wie zuvor erläutert verpresst und kompaktiert. In diesem Falle wäre die Verwendung einer Hülse oder eines Splicecrimps überflüssig. Ebenfalls kann das Ultraschallschweißwerkzeug, insbesondere die Aufnahme, dazu genutzt werden, eine ausreichend hohe Kompaktierung der Aluminiumlitzenleitung zu erzielen.

Wie bereits zuvor erläutert, wird gemäß eines vorteilhaften Ausführungsbeispiels vorgeschlagen, dass eine Schweißnaht zwischen der Stirnseite des abisolierten Endes des Aluminiumlitzenleiters zusammen mit dem Verpressteil und dem Anschlussteil frei von Hohlräumen ist.

Das Verpressteil kann gemäß einem vorteilhaften Ausführungsbeispiel aus Aluminium oder Legierungen davon gebildet sein. Insbesondere kann das Verpressteil plastisch verformbar sein, so dass eine ausreichende Kompaktierung der Aluminiumlitzen des Aluminiumlitzenleiters erzielbar ist.

Das Anschlussteil kann gemäß einem vorteilhaften Ausführungsbeispiel ein Flachleiter sein. Dies kann beispielsweise ein sich über mehr als 30cm erstreckender Flachleiter sein. Auch ist es möglich, dass der Flachleiter ein Blechbiegeteil ist, welches an einem Ende mit der Aluminiumlitzenleitung verbunden ist und am anderen Ende eine Aufnahme für einen Bolzen oder eine Schraube aufweist.

Wie bereits zuvor erläutert, ist es beim torsionalen Ultraschallschweißen nicht mehr notwendig, dass die Fügepartner rotationssymmetrisch sind. Aus diesem Grunde wird vorgeschlagen, dass das Anschlussteil ein L-förmiger Flachleiter ist, wobei ein Schenkel des Flachleiters mit dem Aluminiumlitzenleiter verbunden ist. Der Flachleiter kann beispielweise aus einem von einem Coil abgewickelten Band oder einem Blech gestanzt werden. Beim Stanzen ist es beispielsweise möglich, den Flachleiter unmittelbar zu formen.

Gemäß einem vorteilhaften Ausführungsbeispiel wird vorgeschlagen, dass das Anschlussteil ein Rundleiter ist.

Auch die Verbindung zwischen zwei Rundleitern, dem Aluminiumlitzenleiter und einem weiteren Rundleiter, ist gegenständlich möglich. Der Rundleiter kann ebenfalls ein Aluminiumlitzenleiter sein oder auch ein anderer, beispielsweise aus einem Vollmaterial gebildeter Rundleiter sein. Auch ist es möglich, dass der Rundleiter ein Anschlussbolzen ist.

Es wird vorgeschlagen, dass der Rundleiter auf Stoß mit dem Aluminiumlitzenleiter verbunden wird. Hierbei kann der Rundleiter beispielsweise in die Sonotrode eingespannt werden, und der Aluminiumlitzenleiter in die Aufnahme. Die Sonotrode wird in Richtung der Aufnahme bewegt und es ergibt sich ein Anpressdruck zwischen Rundleiter und Aluminiumlitzenleiter, der zusammen mit der torsionalen Relativbewegung der Fügepartner zueinander im Ultraschallbereich zu einem ausreichend großen Energieeintrag führt.

Ein weiterer Aspekt ist ein Verfahren zur Herstellung eines Aluminiumlitzenleiters mit einem Anschlussteil, umfassend Abisolieren eines Endes des Aluminiumlitzenleiters, und stoffschlüssiges Verbinden des abisolierten Endes des Aluminiumlitzenleiters mit einem metallischen Anschlussteil, welches dadurch gekennzeichnet ist, dass eine Stirnseite des abisolierten Endes des Aluminiumlitzenleiters mit dem metallischen Anschlussteil mittels torsionalem Ultraschallschweißen verschweißt wird.

Ein weiterer Aspekt ist die Verwendung einer zuvor beschriebenen Verbindung für ein Kraftfahrzeugenergiekabel insbesondere ein Batteriekabel.

Nachfolgend wird der Gegenstand anhand einer Ausführungsbeispiele zeigenden Zeichnung näher erläutert.

In der Zeichnung zeigen:
- Fig. 1: eine erste mögliche Schweißverbindung eines Aluminiumlitzenleiters mit einem Flachleiter;
- Fig. 2: eine zweite mögliche Schweißverbindung eines Aluminiumlitzenleiters mit einem Rundleiter;
- Fig.3: eine schematische Darstellung eines torsionalen Ultraschalschweißens;
- Fig.4: eine Ansicht eines Anschlussteils;
- Fig. 5: ein Flussdiagramm eines Verfahrens gemäß eines Ausführungsbeispiels.

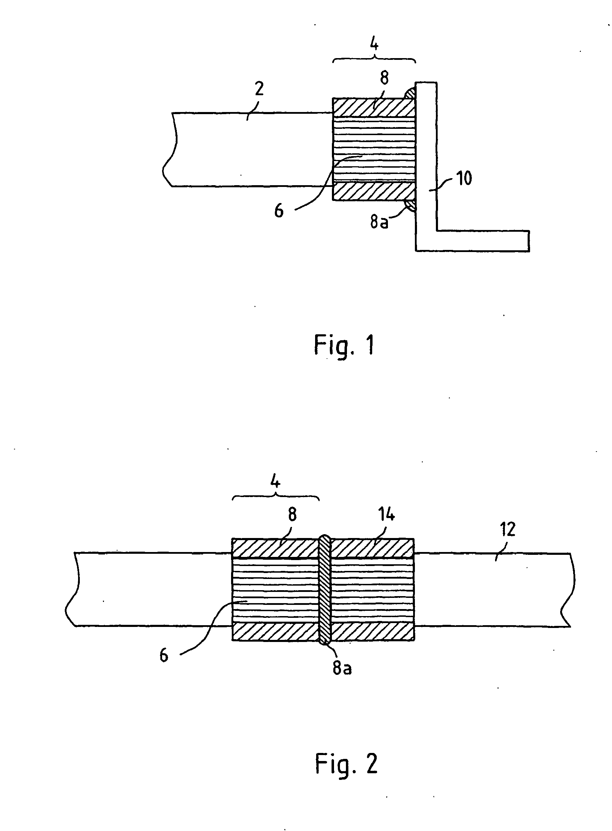

Fig. 1 zeigt einen Aluminiumlitzenleiter 2 mit einem abisolierten Ende 4. An dem abisolierten Ende 4 sind die Aluminiumlitzen 6 zu erkennen. Ferner zeigt die Figur 1 ein Verpressteil 8 sowie ein L-förmiges Anschlussblech 10. Der in Figur 1 dargestellte Aluminiumlitzenleiter 2 ist an seinem abisolierten Ende 4 mittels einer Hülse 8 derart verpresst, dass die Aluminiumlitzen 6 kompaktiert sind, so dass zwischen den Aluminiumlitzen 6 Lufteinschüsse im Wesentlichen entfernt sind. Die so kompaktierte Stirnseite des Aluminiumlitzenleiters 2 wird beispielsweise mittels spanender Verfahren von Aluminiumoxid befreit. Im unmittelbaren Anschluss daran wird das abisolierte Ende 4 samt Hülse 8 in eine Aufnahme eines Ultraschallschweißwerkzeuges gespannt. Eine Sonotrode wird auf der dem abisolierten Ende abgewandten Seite an dem Anschlussblech 10 angeordnet und fest mit dem Anschlussblech 10 verbunden. Im Anschluss daran wird das Anschlussblech 10 gegen das abisolierte Ende des Aluminiumlitzenleiters 2 gedrückt. Beim torsionalen Ultraschallschweißen wird der Aluminiumlitzenleiter 2 relativ zum Anschlussblech 10 oder umgekehrt in axialer Richtung verdreht. Die Drehbewegungen sind minimal und haben Auslenkungen von weniger als 1mm. Die Drehbewegungen zueinander sind im Ultraschallbereich, d.h. dass die Fügepartner mit Frequenzen von über 10 kHz beispielsweise 20 kHz zueinander bewegt werden. Die sich ausbildende Schweißwulst 8a kann beispielsweise in dem Blechbiegeteil 10 aufgenommen werden, wenn hierin eine Vertiefung gezogen wäre (nicht dargestellt).

Durch das torsionale Ultraschallschweißen ist es möglich, mit geringen Taktzeiten, beispielsweise bei einer Schweißzeit von 1,5 Sekunden oder weniger, beispielsweise 1,2 Sekunden, Fügepartner, die nicht rotationssymmetrisch sind, miteinander zu verschweißen. Die axiale Endlage der Fügepartner zueinander lässt sich mittels des torsionalen Ultraschallschweißens definieren.

Fig. 2 zeigt eine weitere Möglichkeit, einen Aluminiumlitzenleiter 2 mit einem Rundleiter 12 zu verschweißen. Hierbei ist es beispielsweise möglich, dass das Verpressteil 8 ein Splicecrimp ist und der Rundleiter 12 ebenfalls ein Aluminiumlitzenleiter ist. Auch kann das Verpressteil 8 eine Aufnahme des Schweißwerkzeugs sein. Das Verpressteil 14 kann beispielsweise eine Hülse sein oder die Sonotrode des Ultraschallschweißwerkzeugs. Zwischen den Fügepartnern bildet sich eine Schweißwulst 8a. Durch das Verpressen mittels der Verpressteile 8, 14 sind die Litzen 6 im Wesentlichen frei von Lufteinschlüssen.

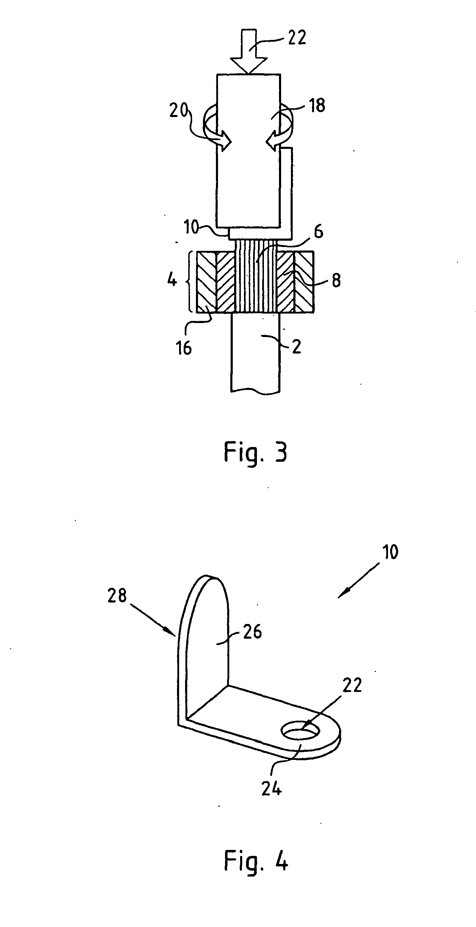

Fig. 3 zeigt schematisch den Fügeprozess gemäß Fig. 1. Zu erkennen ist, dass der Aluminiumlitzenleiter 2 an seinem abisolierten Ende 4 mit einer Hülse 8 verpresst ist. Die Hülse 8 ist über das abisolierte Ende 4 geschoben und verpresst die Litzen 6 des Aluminiumlitzenleiters 2 derart, dass diese kompaktiert und frei von Lufteinschlüssen sind. Die Aluminiumhülse 8 kann beispielsweise eine Wandstärke von weniger als 2mm haben. Die Aluminiumhülse 8 kann darüber hinaus beispielsweise kürzer als 5cm, bevorzugt kürzer als 3cm sein, da die Stauchkräfte, die durch das torsionale Ultraschallschweißen eingebracht werden, geringer sind, als beim Rotationsreibschweißen. Die Hülse 8 ist, wie in Fig. 3 dargestellt, in einer Aufnahme 16 eingespannt. Die Aufnahme 16 könnte ebenfalls als Verpressteil dienen (nicht dargestellt). Die Aufnahme 16 ist sowohl in axialer als auch in radialer Richtung fixiert.

Das Blechbiegeteil 10 ist an einer Sonotrode 18 angeordnet. Die Sonotrode 18 presst das Blechbiegeteil 10 in Richtung 20 gegen die Aluminiumhülse 8. Ferner führt die Sonotrode 18 Drehbewegungen in Richtung 20 mit kleinen Auslenkungen aus, so dass das Blechbiegeteil 10 gegenüber der Hülse 8 relativ bewegt wird. Um die Drehbewegung von der Sonotrode 18 auf das Blechbiegeteil 10 zu übertragen, ist die Sonotrode 18 fest an das Blechbiegeteil 10 gepresst, und kann dieses beispielsweise auch umgreifen. Während des Fügens wird durch die Relativbewegung in Richtung 22 Energie in die Fügestelle zwischen Bleichbiegeteil 10 und Hülse 8 eingebracht, so dass das Material dort erhitzt wird und sich eine Schweißnaht bildet. Hierbei kann die Temperatur unterhalb der Schmelztemperatur von metallischen Fügepartnern sein. Die axiale Positionierung der Fügepartner Aluminiumhülse 8 und Blechbiegeteil 10 zueinander ist beim torsionale Ultraschallschweißen definierbar.

Fig. 4 zeigt ein Blechbiegeteil 10. Das Blechbiegeteil 10 ist L-förmig und weist auf einem Schenkel eine Bohrung 22 zur Aufnahme eines Bolzens oder einer Schraube auf. Die Bohrung 22 kann von einer Auflage oder Schraubfläche 24, welche verzinnt ist, umgeben sein. Der zweite Schenkel des Blechbiegeteils weist auf der einen Seite 26 eine Angriffsfläche für die Sonotrode 18 auf, über die die axiale Bewegung in Richtung 22 in das Blechbiegeteil 10 eingebracht werden kann. Die andere Seite 28 des Blechbiegeteils 10 kann frei von Zinn sein, so dass sich eine gute Schweißnaht ergibt. Die erste Seite 26 ist für die Sonotrode 20 zugänglich, so dass das Blechbiegeteil 10 gegen die Hülse 8 gepresst werden kann.

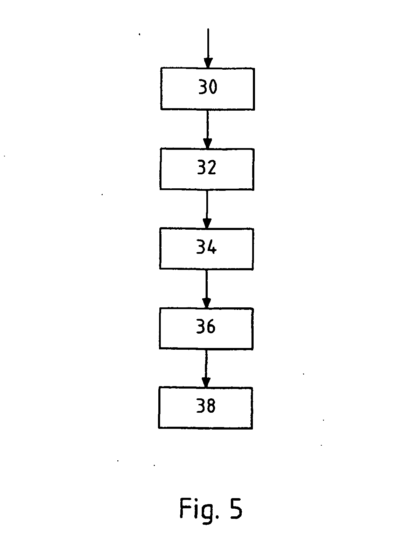

Fig. 5 zeigt schematisch ein Ablaufdiagramm eines gegenständlichen Verfahrens. In einem ersten Schritt 30 kann von einem Coil ein endloses Aluminiumband abgewickelt werden und einem Splicecrimpwerkzeug zugeführt werden. Hierzu wird in einem Arbeitsgang das Aluminiumband geschnitten, um die Litzen des Aluminiumlitzenleiters geformt und verpresst. Hierdurch werden die Aluminiumlitzen des Aluminiumlitzenleiters kompaktiert und Hohlräume verhindert.

Dies kann in einem Schritt 32 geschehen. In einem Schritt 34 wird das abisolierte Ende, welches mit dem Verpressteil verpresst ist, in einer Aufnahme eingespannt. In einem Schritt 36 wird ein L-förmiges Blechbiegeteil an eine Sonotrode herangeführt und die Sonotrode presst das Blechbiegeteil gegen die Stirnseite des Aluminiumlitzenleiters und das Verpressteil. In einem Schritt 38 wird mittels der Sonotrode sowohl eine Kraft in axialer Richtung in Richtung des Aluminiumlitzenleiters als auch eine torsionale Bewegung in das Blechbiegeteil eingebracht. Hierdurch bewegt sich das Blechbiegeteil relativ zum abisolierten Ende des Aluminiumlitzenleiters und eine ausreichende Schweißenergie wird eingetragen.

Die so entstandene Schweißverbindung hat eine axial definierte Position der Fügepartner zueinander und ist kostengünstig herstellbar.

## Patentansprüche

1. Verbindung eines Aluminiumlitzenleiters mit einem Anschlussteil, mit
- einem abisolierten Ende (4) des Aluminiumlitzenleiters (2), und
- einem mit dem abisolierten Ende (4) des Aluminiumlitzenleiters (2) stoffschlüssig verbundenem metallischen Anschlussteil (10),
**dadurch gekennzeichnet,**
- **dass** eine Stirnseite des abisolierten Endes (4) des Aluminiumlitzenleiters (2) mit dem Anschlussteil (10) mittels torsionalem Ultraschallschweißen verschweißt ist.

2. Verbindung nach Anspruch 1, **dadurch gekennzeichnet, dass** ein das abisolierte Endes (4) des Aluminiumlitzenleiters (2) umschließendes Verpressteil (8) die Aluminiumlitzen (6) zu einem Bündel verpresst.

3. Verbindung nach Anspruch 2, **dadurch gekennzeichnet, dass** das Verpressteil (8) derart gebildet ist, dass die Litzen (6) des Aluminiumlitzenleiters (2) im Bereich des Verpressteils (8) frei von Hohlräumen aneinander anliegen.

4. Verbindung nach Anspruch 2, **dadurch gekennzeichnet, dass** eine Stirnseite des abisolierten Endes (4) des Aluminiumlitzenleiters (2) zusammen mit dem Verpressteil (8) mit dem Anschlussteil (10) mittels torsionalem Ultraschallschweißen verschweißt ist.

5. Verbindung nach Anspruch 2, **dadurch gekennzeichnet, dass** das Verpressteil (8) eine Hülse oder ein Splicecrimp ist.

6. Verbindung nach Anspruch 5, **dadurch gekennzeichnet, dass** die Hülse oder der Splicecrimp zur Aufnahme von Stauchkräften eines torsionalen Ultraschallschweißwerkzeuges (18) gebildet ist.

7. Verbindung nach Anspruch 2, **dadurch gekennzeichnet, dass** das Verpressteil (8) eine Aufnahme eines torsionalen Ultraschallschweißwerkzeuges (18) ist.

8. Verbindung nach Anspruch 1 bis 6, **dadurch gekennzeichnet, dass** eine Schweißnaht (8a) zwischen der Stirnseite des abisolierten Endes (4) des Aluminiumlitzenleiters (2) zusammen mit dem Verpressteil (8) und dem Anschlussteil (10) frei von Hohlräumen ist.

9. Verbindung nach einem der vorangehenden Ansprüche,
**dadurch gekennzeichnet, dass** das Verpressteil (8) aus Aluminium oder Legierungen davon gebildet ist.

10. Verbindung nach einem der vorangehenden Ansprüche,
**dadurch gekennzeichnet, dass** das Anschlussteil (10) ein Flachleiter ist.

11. Verbindung nach einem der vorangehenden Ansprüche,
**dadurch gekennzeichnet, dass** das Anschlussteil (10) ein 1-förmiger Flachleiter ist, wobei ein Schenkel des Flachleiters mit dem Aluminiumlitzenleiters (2) verbunden ist.

12. Verbindung nach einem der vorangehenden Ansprüche,
**dadurch gekennzeichnet, dass** das Anschlussteil (10) ein Rundleiter ist.

13. Verbindung nach Anspruch 11, **dadurch gekennzeichnet, dass** der Aluminiumlitzenleiters (2) mit dem Rundleiter auf Stoss verbunden ist.

14. Verfahren zur Herstellung eines Aluminiumlitzenleiters mit einem Anschlussteil, mit
- Abisolieren eines Endes des Aluminiumlitzenleiters (2),
und
- Stoffschlüssiges Verbinden des abisolierten Endes (4) des Aluminiumlitzenleiters (2) mit einem metallischen Anschlussteil (10),
**dadurch gekennzeichnet,**
- **dass** eine Stirnseite des abisolierten Endes (4) des Aluminiumlitzenleiters (2) mit dem metallischen Anschlussteil (10) mittels torsionalem Ultraschallschweißen verschweißt wird.

15. Verwendung einer Verbindung nach Anspruch 1 für ein Kraftfahrzeugenergiekabel, insbesondere ein Batteriekabel.

## Claims

1. Connection of an aluminium stranded lead with a connection part, comprising
- a stripped end of the aluminium stranded lead and
- a metal connection part which is materially bonded to the stripped end of the aluminium stranded lead, **characterised in that**
- an end face of the stripped end of the aluminium stranded lead is welded to the connection part by means of torsional ultrasonic welding.

2. Connection of claim 1, **characterised in that** a compression part which surrounds the stripped end of the aluminium stranded lead compresses the aluminium strands to form a bundle.

3. Connection of claim 2, **characterised in that** the compression part is formed in such a way that the strands of the aluminium stranded lead bear against one another in the region of the compression part in a manner free from cavities.

4. Connection of claim 2, **characterised in that** an end face of the stripped end of the aluminium stranded lead is welded together with the compression part to the connection part by means of torsional ultrasonic welding.

5. Connection of claim 2, **characterised in that** the compression part is a sleeve or a splice crimp terminal.

6. Connection of claim 5, **characterised in that** the sleeve or the splice crimp terminal is formed so as to absorb compression forces of a torsional ultrasonic welding tool.

7. Connection of claim 2, **characterised in that** the compression part is a holder of a torsional ultrasonic welding tool.

8. Connection of claim 1, **characterised in that** a weld seam between the end face of the stripped end of the aluminium stranded lead together with the compression part and the connection part is free from cavities.

9. Connection of claim 1, **characterised in that** the compression part is formed from aluminium or alloys thereof.

10. Connection of claim 1, **characterised in that** the connection part is a flat lead.

11. Connection of claim 1, **characterised in that** the connection part is an L-shaped lead, wherein one leg of the flat lead is connected to the aluminium stranded lead

12. Connection of claim 1, **characterised in that** the connection part is a round lead.

13. Connection of claim 12, **characterised in that** the aluminium stranded lead is face-connected to the round lead.

14. Method for producing a connection of an aluminium stranded lead to a connection part, which comprises
- stripping one end of the aluminium stranded lead and
- materially bonding the stripped end of the aluminium stranded lead to a metal connection part,
**characterised in that**
- an end face of the stripped end of the aluminium stranded lead is welded to the metal connection part by means of torsional ultrasonic welding.

15. Use of a connection of claim 1 for a motor vehicle power cable, in particular a battery cable.

## Revendications

1. Système de connexion d'une torsade en aluminium, et d'un élément de raccordement, comprenant
- une extrémité dénudée (4) de la torsade en aluminium (2), et
- un élément de raccordement (10) métallique, qui est relié par liaison de matière à l'extrémité dénudée (4) de la torsade en aluminium (2),
**caractérisé en ce qu'**un côté frontal de l'extrémité dénudée (4) de la torsade en aluminium (2) est reliée par soudure par ultrasons torsionnelle à l'élément de raccordement (10).

2. Système de connexion selon la revendication 1, **caractérisé en ce qu'**une pièce de compression (8), qui entoure l'extrémité dénudée (4) de la torsade en aluminium (2), presse les brins d'aluminium (6) en un faisceau.

3. Système de connexion selon la revendication 2, **caractérisé en ce que** la pièce de compression (8) est conçue de sorte que les brins (6) de la torsade en aluminium (2) portent les uns contre les autres sans espaces vides, dans la région de la pièce de compression (8).

4. Système de connexion selon la revendication 2, **caractérisé en ce que** l'extrémité dénudée (4) de la torsade en aluminium (2), en commun avec la pièce de compression, (8), est soudée avec l'élément de raccordement (10) par soudure par ultrasons torsionnelle.

5. Système de connexion selon la revendication 2, **caractérisé en ce que** la pièce de compression (8) est une douille ou un "splicecrimp".

6. Système de connexion selon la revendication 5, **caractérisé en ce que** la douille ou le "splicecrimp" est conçu/e pour recevoir les forces de refoulement d'un outil de soudure par ultrasons torsionnelle (18).

7. Système de connexion selon la revendication 2, **caractérisé en ce que** la pièce de compression (8) est un réceptacle pour un outil de soudure par ultrasons torsionnelle (18).

8. Système de connexion selon l'une des revendications 1 à 6, **caractérisé en ce qu'**un cordon de soudure (8a), entre la face frontale de l'extrémité dénudée (4) de la torsade en aluminium (2), en commun avec la pièce de compression (8), et l'élément de raccordement (10), est exempt d'espaces vides.

9. Système de connexion selon l'une des revendications précédentes, **caractérisé en ce que** la pièce de compression (8) est réalisée en aluminium ou en alliages d'aluminium.

10. Système de connexion selon l'une des revendications précédentes, **caractérisé en ce que** l'élément de raccordement (10 est un conducteur plat.

11. Système de connexion selon l'une des revendications précédentes, **caractérisé en ce que** l'élément de raccordement (10) st un conducteur plat en forme de 1, une aile dudit conducteur plat étant reliée à la torsade en aluminium (2)

12. Système de connexion selon l'une des revendications précédentes, **caractérisé en ce que** l'élément de raccordement (10) est un conducteur rond.

13. Système de connexion selon la revendication 11, **caractérisé en ce que** la torsade en aluminium (2) est aboutée au conducteur rond..

14. Procédé de fabrication d'une torsade en aluminium avec un élément de raccordement, comprenant les étapes suivantes :
- dénudement d'une extrémité de la torsade en aluminium (2), et
- liaison de l'extrémité dénudée (4) de la torsade en aluminium (2) à un élément de raccordement métallique (10) par liaison de matière,
**caractérisé en ce qu'**un côté frontal de l'extrémité dénudée (4) de la torsade en aluminium (2) est relié à élément de raccordement métallique (10) par soudure par ultrasons torsionnelle.

15. Utilisation d'un système de connexion selon la revendication 1 pour un câble de puissance de véhicule automobile, en particulier pour un câble de batterie.
